# EUROPÄISCHE PATENTSCHRIFT

(11) **EP 3 747 847 B1**
(45) Veröffentlichungstag und Bekanntmachung des Hinweises auf die Patenterteilung: **27.10.2021**
(21) Anmeldenummer: 19178538.5
(22) Anmeldetag: 05.06.2019
(51) Int. Cl.: C04B 7/36

(54) **QUECKSILBERABSCHEIDUNG BEI DER HERSTELLUNG VON ZEMENTKLINKER**
MERCURY SEPARATION FOR THE PRODUCTION OF A CEMENT CLINKER
SÉPARATION DE MERCURE LORS DE LA FABRICATION DE CLINKER

(43) Veröffentlichungstag der Anmeldung: 09.12.2020
(73) Patentinhaber: Steinmüller Engineering GmbH, 51643 Gummersbach (DE)
(72) Erfinder: Dr. Heidrich, Rüdiger, 51643 Gummersbach (DE); Dr. Binkowski, Stefan, 51643 Gummersbach (DE); Dr. Bloss, Wolfgang, 51643 Gummersbach (DE)
(74) Vertreter: Godemeyer Blum Lenze Patentanwälte Partnerschaft mbB - werkpatent

(56) Entgegenhaltungen:
- EP-A1- 0 299 340
- EP-A1- 3 219 689

## Beschreibung

Die vorliegende Erfindung betrifft eine Vorrichtung und ein Verfahren zur Abscheidung von Quecksilber und/oder Quecksilberverbindungen aus dem bei der Zementklinkerherstellung im Abgas anfallenden Filterstaub. Die Erfindung betrifft weiterhin eine Verwendung eines Erhitzers zur Abscheidung von Quecksilber und/oder Quecksilberverbindungen aus bei der Zementklinkerherstellung im Abgas anfallendem Filterstaub.

### Technisches Gebiet

Das in den Brennstoffen und den Rohmaterialien für die Zementherstellung enthaltene Quecksilber wird nach dem in den Zementwerken stattfindenden Verbrennungsprozessen als elementares Quecksilber Hg⁰ und als oxidiertes (ionisches) Quecksilber Hg²⁺ im staubhaltigen Abgas abgelagert und transportiert. Bei einer Abkühlung der Abgase wird ein Großteil des Quecksilbers am Staub gebunden. Um eine Anreicherung im Herstellungsprozess zu vermeiden, wird quecksilberhaltiger Staub aus einem Staubfilter ausgeschleust, in eine Klinkermühle aufgegeben und zum Endprodukt Zement vermahlen. Dieses Verfahren wird auch als "dust shuttling" bezeichnet und ist zurzeit in der Zementherstellung üblich.

Im Jahr 2019 sind die bisherigen Grenzwerte für Quecksilber im Abgas von Zementwerken von 30 auf 10 µg/Nm³ herabgesetzt worden. Mit Umsetzung der BREF-Dokumente (2021) in die deutsche Gesetzgebung sind derzeit Grenzwerte für Quecksilber (Hg) für die Abgasemissionen im Bereich <1-7 µg/Nm³ tr. 6% O₂ im Jahresmittel in der Diskussion. In der Zukunft ist mit einer stufenweisen Herabsetzung der Hg-Grenzwerte zu rechnen.

Die meisten Zementwerke sind derzeit nicht mit speziellen Hg-Minderungstechnologien ausgestattet. Nasse Quecksilberminderungsverfahren, wie sie beispielsweise zur Reinigung von Verbrennungsgasen bei Müllverbrennungsanlagen eingesetzt werden, kommen für Zementwerke nicht in Betracht.

In Zementwerken wird Zement in einem kontinuierlichen Prozess in einem Trockenverfahren in Drehrohröfen hergestellt. Dabei werden Rohmaterialien, wie zum Beispiel Kalkstein und Ton oder Mergel und silikathaltige Rohstoffe, vermahlen und gleichzeitig getrocknet, danach in unterschiedlichen Produktionsschritten vorgewärmt, kalziniert und zu Zementklinker gebrannt. Das Brennen des Zementklinkers erfolgt in Drehrohröfen, die leicht geneigt sind. Die erforderliche Energie wird durch Verbrennung von beispielsweise Kohlestaub oder anderen Brennstoffen in einem am Drehrohrende installierten Brenner erzeugt. Im Bereich der Flamme, mit Gastemperaturen von 1.800 bis 2.000 °C, werden Brennguttemperaturen von bis zu 1450 °C erreicht. Die Vorwärmung und die Kalzinierung des Rohmehls erfolgen entweder im Drehrohrofen selbst oder aber in einer separaten Vorwärmstufe, die in der Regel aus mehreren Zyklonen besteht, bzw. in einem getrennten Kalzinator (Kalzinierreaktor). Die heißen Abgase des Drehrohrofens durchströmen den Kalzinator und die Vorwärmstufe von unten nach oben. Das trockene Rohmehl wird der obersten Zyklonstufe zugegeben, in den einzelnen Zyklonen wieder aus dem Gas abgeschieden und vor der nächsten Zyklonstufe erneut im Gasstrom suspendiert. Das Rohmehl wird in der Vorwärmstufe in der Regel auf eine Temperatur von bis zu 1000 °C vorgewärmt. Im Zyklonvorwärmer erfolgt eine teilweise Kalzinierung des Rohmehls. Die weitere Kalzinierung des Rohmehls erfolgt dann im Kalzinator bevor es in den Drehrohrofen gelangt, oder im Drehrohrofen selbst, wenn kein Kalzinator installiert ist.

Grundsätzlich besteht die Möglichkeit, das in den Rohmaterialien vorkommende Quecksilber bereits vor der Verwendung für die Zementklinkerherstellung zu entfernen bzw. zu reduzieren. Dies kann beispielsweise durch eine Aufbereitung der Rohmaterialien mit heißen Gasen erfolgen, wodurch das enthaltene Quecksilber zumindest teilweise verdampft und anschließend in konzentrierter Form abgeschieden werden kann. Durch das Aufwärmen der Rohmaterialien ist jedoch relativ viel Energie erforderlich, was die Gesamtkosten erhöht und das Verfahren bei hohen Materialdurchsätzen unwirtschaftlich macht.

Auch Lösungen, bei welchen der gesamte Abgasstrom des Drehrohrofens bei der Zementklinkerherstellung mit Hilfe bestimmter Abgasreinigungsverfahren zur Quecksilberabscheidung, wie zum Beispiel Aktivkohlefilter, gereinigt wird, sind aufgrund der großen Rauchgasmengen und somit erforderlichen Anlagengröße wirtschaftlich nicht akzeptabel.

Zur Reinigung von Abgasen zur Abscheidung von Quecksilber in Zementwerken wird im Stand der Technik mitunter ein Teilstrom des Abgases, etwa durch Zugabe von Fällungsmitteln, Komplexierungsmitteln oder Adsorbens, behandelt. Problematisch ist hier jedoch die Trennung des eingesetzten quecksilberbindenden Additivs von dem wertvollen in den Abgasen transportieren Staub, welcher optimalerweise zurückgewonnen und als Rohmaterial dem Zementherstellungsprozess wieder zugeführt wird.

Die EP 2 709 962 B1 verfolgt den Ansatz gasförmiges Quecksilber direkt aus dem Abgasstrom abzutrennen. Dabei wird ein geringer Anteil des Hauptstroms der mindestens 300 °C warmen Abgase abgezweigt und einer zumindest teilweisen Entstaubung und nachfolgenden Quecksilber-Abscheidung zugeführt wird. Dafür wird im oberen Bereich der Vorwärmstufe bei Temperaturen zwischen 300 °C bis 400 °C ein Teilstrom abgeleitet, unter Verwendung einer Schlauchfilters entstaubt und das Quecksilber abgeschieden. Der Teilstrom kann anschließend in die Vorwärmstufe zurückgeführt werden. Eine Abscheidung des gesamten im Hauptstrom anfallenden Quecksilbers wird nicht beschrieben.

Die US 2019/0015779 A1 beschreibt die Behandlung eines ca. 176 °C heißen Abgasstroms durch Einspritzen einer Behandlungsflüssigkeit, welche ein wasserlösliches Erdalkalimetallsulfid enthält. Die resultierenden quecksilberhaltigen Partikel werden durch einen Filter aufgefangen.

Die WO 2018/131277 A1 offenbart die Aufreinigung eines Abgasstroms aus der Vorwärmstufe durch die Zugabe von quecksilberbindenden Additiven vor einem Entstaubungsfilter, wonach der aufgefangene Staub pneumatisch zu einem Erhitzer transportiert wird und das Quecksilber dem aufgeheizten Staub gasförmig entweicht.

Der Quecksilber-abgereicherte Staub wird in die Vorwärmstufe zurückgeführt. Das gasförmige Quecksilber wird gekühlt und in einem Sammelbehälter aufgefangen.

Die EP 3 219 689 A1 beschreibt das Entstauben des Hauptabgases aus der Vorwärmstufe bei einer Temperatur unterhalb der Siedetemperatur des Quecksilbers, wodurch der mit Quecksilber beladene Staub erhalten wird. Das Quecksilber wird in einem Bypass-Rauchgas durch Einspritzen von mindestens einer Fraktion des mit Quecksilber beladenen Staubes verdampft. Anschließend wird ein Additiv, beispielsweise Aktivkohle, in das Bypass-Rauchgas injiziert, wonach das Bypass-Rauchgas abgekühlt und entstaubt wird. Durch anschließendes Abscheiden des Additivs wird das Quecksilber schließlich aus dem Prozess entfernt.

Die JP 2018/135248 offenbart die Reinigung des Abgases aus einer Vorwärmstufe durch eine Zugabe von quecksilberabsorbierenden Additiven. Das Abgas wird unmittelbar vor dem Kamin entstaubt, wobei der unverbrannte Kohlenstoff des Staubes gemessen und die Menge des zuzugebenden Additivs an dieses Messergebnis angepasst wird. Der Staub wird in einem ersten Kreislauf der Vorwärmstufe wieder zugeführt und in einem zweiten Kreislauf über eine Quecksilber-Rückgewinnungsvorrichtung in die Vorwärmstufe zurückgeleitet.

Die WO 2012/082539 beschreibt ein Verfahren zur Reduzierung von Quecksilberemissionen aus einer Zementanlage, wobei der Abgasstrom aus einer Vorwärmstufe entnommen und entstaubt wird. Dieser Staub wird erhitzt, um das Quecksilber gasförmig auszutreiben. Anschließend wird der Staub in den Zementofen zurückgeführt und das gasförmige Quecksilber wird zu einer Quecksilber-Wäsche geleitet. Optional kann dem Abgasstrom ein quecksilberbindendes Additiv injiziert werden.

Die EP 3 178 538 A2 offenbart ein Verfahren zur Aufbereitung von Zementofenstaub, wobei dieser Staub gesammelt und mit Hilfe eines Verdampfungskessels und einer Dosierschnecke auf ca. 350 °C erhitzt wird, um das Quecksilber gasförmig auszutreiben. Das gasförmige Quecksilber wird in einer Kammer mit einer quecksilberbindenden Flüssigkeit enthaltend Erdalkalimetallsulfide und/oder Polysulfide behandelt, so dass sich quecksilberhaltige Partikel bilden. Diese Partikel werden in einer Sammelanlage aufgefangen und können recycelt werden.

Die EP 0 519 225 B1 offenbart ein Verfahren und eine Vorrichtung zur Abgasreinigung wobei zunächst zu reinigende Abgase in einer ersten Filterstufe einer Staubentfernung unterzogen und anschließend in mindestens einer weiteren Filterstufe mit Hilfe eines kohlenstoffhaltigen Filtermediums von darin enthaltene toxische Verbindungen gereinigt werden. Damit der in der ersten Filterstufe entfernte Filterstaub entweder wiederverwendet oder in einfachen Abfallsammlern gelagert werden kann, wird der Gehalt an tiefsiedenden toxischen Substanzen und toxischen Verbindungen in diesem abgeschiedenen Filterstaub durch aufeinanderfolgende Prozessschritte verringert. Die Giftstoffe werden aus dem Filterstaub unter Verwendung eines Drehrohrofens verdampft, wobei zunächst die Staubfraktionen von diesen Dämpfen abgetrennt werden und die Dämpfe, aus denen der Staub entfernt wurde, durch eine Filtereinheit geleitet werden, die kohlenstoffhaltiges Filtermedium enthält. Nachteilig bei dieser Vorgehensweise ist jedoch, dass eine Vorrichtung zur Entstaubung der mit Quecksilber beladenen Dämpfe eingesetzt werden muss. Dies liegt darin begründet, dass durch die Drehung des Drehrohrofens, in dem der belastete Filterstaub erhitzt wird, Staub aufgewirbelt wird. Zur Vermeidung dieser Staubaufwirbelung müsste der Drehrohrofen sehr langsam gedreht werden, wodurch der zu behandelnde Filterstaub jedoch praktisch nicht mehr weitergefördert werden könnte.

Problematisch ist bei den Vorrichtungen und Verfahren gemäß Stand der Technik, dass Filterstaub, welcher als wertvolles Rohmaterial dem Zementherstellungsprozess zurückgeführt werden sollte, aufgewirbelt und zusammen mit toxischen Substanzen, wie Quecksilber, abgeschieden wird und folglich verloren geht. Des Weiteren setzten bisherige Verfahren üblicherweise quecksilberbindende Additive ein, welche anschließend aufwendig aus dem Prozess entfernt werden müssen.

### Aufgabe der Erfindung

Aufgabe der vorliegenden Erfindung ist daher die Bereitstellung eines Verfahrens und einer Vorrichtung zur Abscheidung von Quecksilber und/oder Quecksilberverbindungen aus Verbrennungsgasen von Zementwerken, um die künftigen sehr geringen Grenzwerte für Schwermetall, insbesondere Quecksilber und entsprechende chemische Verbindungen davon, für die Abgase von Zementwerken und im Zement einhalten zu können. Daneben soll eine ausreichend hohe Reduktion der Quecksilber-Emissionen ermöglicht werden ohne dabei wertvollen Quecksilber-abgereicherten Staub mitabzuscheiden. Weiterhin soll möglichst kein quecksilberbindendes Additiv zusammen mit dem Quecksilber-abgereicherten Staub in den Zementklinkerherstellungsprozess gelangen. Das Quecksilber soll zudem aus einem möglichst kleinen Stoffstrom entfernt werden, um die Menge an zusätzlicher Energie möglichst gering zu halten. Schließlich sollen die Installation und der Betrieb der erfindungsgemäßen Vorrichtung und des erfindungsgemäßen Verfahrens kostengünstig sein.

### Beschreibung der Erfindung

Um das vorliegende technische Problem zu lösen, strebten die Erfinder der vorliegenden Erfindung eine neuartige Vorrichtung und ein neuartiges Verfahren an, um die dargelegten Anforderungen zu erfüllen.

Die technische Aufgabe wird gelöst durch eine Vorrichtung zur Abscheidung von Quecksilber und/oder Quecksilberverbindungen aus bei der Zementklinkerherstellung im Abgas anfallendem Filterstaub, mit einer Vorwärmstufe, einer Aufgabe für die zur Zementklinkerherstellung benötigten Rohmaterialien im Gegenstromprinzip gegen die Richtung der Strömung der Abgase in der Vorwärmstufe, einem Drehrohrofen zur Klinkerherstellung, und zumindest einer Filterstufe zur Entstaubung der quecksilberhaltigen Abgase vor Austritt in die Atmosphäre, wobei die Filterstufe mit Quecksilber beladenen Filterstaub bereitstellt, der Filterstufe ein Erhitzer zum Aufheizen des quecksilberhaltigen Filterstaubes auf mindestens 250 °C zur gasförmigen Austreibung des Quecksilbers aus dem Filterstaub nachgeordnet ist, und wobei der Erhitzer eingerichtet ist, ein Trägergas durch den Erhitzer über den Filterstaub zu führen, zur Austragung des gasförmigen Quecksilbers aus dem Erhitzer, wobei gemäß der Erfindung
der Erhitzer mit peripherer Beladeöffnung und zentraler Entladeöffnung für den in der Filterstufe erhaltenen Filterstaub ausgestattet ist und eine zum Zentrum hin geneigte, um eine senkrechte Achse drehbare, indirekt beheizbare Platte umfasst,
der Filterstaub auf der Oberseite der drehbaren, indirekt beheizbaren Platte durch den Erhitzer von der Beladeöffnung in Richtung der zentralen Entladeöffnung beförderbar ist, und dem Erhitzer zumindest ein Reaktor zur Abscheidung von Quecksilber aus dem quecksilberhaltigen Trägergas nachgeordnet ist.

Die erfindungsgemäße Vorrichtung und auch das unten beschriebene Verfahren dienen zur Abscheidung von Quecksilber aus bei der Zementklinkerherstellung im Abgas anfallendem Filterstaub, und damit indirekt auch aus den Abgasen bei der Zementklinkerherstellung. Dabei schließt der Begriff "Quecksilber" stets auch all seine Verbindungen ein, sofern nicht anders beschrieben. Der Begriff "Filterstaub" oder "Staub" bezeichnet einen Staub, der aus Anteilen von Zementklinker, Rohmehl und prozessbedingten Zwischenprodukten besteht, sofern nicht anders beschrieben.

Bevorzugt ist vor der Filterstufe für das quecksilberhaltige Abgas eine Einrichtung zur Abkühlung angeordnet. Diese kühlt das Abgas vorzugsweise auf 100 °C bis 250 °C, weiter vorzugsweise 120 °C bis 200 °C, und optimiert somit die Anreicherung des Quecksilbers im Filterstaub. Alternativ oder zusätzlich kann vor der Filterstufe für das quecksilberhaltige Abgas eine Rohmehlmühle angeordnet sein, um das Abgas vorzugsweise auf 100 °C bis 250 °C, weiter vorzugsweise 120 °C bis 200 °C zu kühlen.

In der erfindungsgemäßen Vorrichtung ergibt die Entstaubung des Abgases einen möglichst kleinen Volumenstrom, in welchem das Quecksilber konzentriert vorliegt. Es wird zudem nicht ein Teilstrom des Abgases abgezweigt und eine geringe Menge des Quecksilbers abgeschieden, sondern es kann durch die erfindungsgemäße Vorrichtung ein Großteil des im gesamten Abgasstrom vorkommenden Quecksilbers abgeschieden werden. Die vorliegende Erfindung behandelt somit nicht direkt das quecksilberhaltige Abgas, sondern das staubhaltige Material, das auf bekannte Weise aus dem Abgasstrom in einem Filter abgeschieden wird.

Zum Zwecke der Austreibung des Quecksilbers oder deren Verbindungen aus dem Filterstaub kann die erfindungsgemäße Vorrichtung einen einzelnen Erhitzer sowohl als auch mehrere Erhitzer aufweisen.

Wie oben bereits erläutert, ist der Erhitzer eingerichtet, das im Filterstaub enthaltene Quecksilber durch schonendes Erhitzen des Staubes auf mindestens 250 °C auszudampfen. In bevorzugter Weise beträgt die Temperatur hierfür mindestens 300 °C, weiter bevorzugt mindestens 400 °C, noch weiter bevorzugt 300 °C bis 500 °C, und besonders bevorzugt 350 °C bis 400 °C.

Zudem wird bevorzugt für den Erhitzer eine Einrichtung eingesetzt, in der sich ein Aufwirbeln des zu behandelnden Filterstaubes vermeiden lässt. Daher ist die Vorrichtung vorzugsweise so konstruiert, dass das Trägergas langsam über den im Erhitzer erhitzten und geförderten Filterstaub streicht und somit das gasförmige Quecksilber aufnimmt. In einer bevorzugten Ausführungsform verhindert eine geringe Geschwindigkeit des Trägergases in dem Erhitzer von bis zu 10 cm/s, vorzugsweise von bis zu 5 cm/s, weiter vorzugsweise von bis zu 1 cm/s das Aufwirbeln des Filterstaubes, wobei diese Geschwindigkeit vorzugsweise am Rand der drehbaren Platte des Erhitzers gemessen wird.

Das gasförmige Quecksilber wird durch das Trägergas in Form von elementarem Quecksilber oder in Form seiner unterschiedlichen Verbindungen aus dem Erhitzer ausgetragen. Vorzugsweise weist der Erhitzer eine Haube auf, die über der drehbaren, indirekt beheizbaren Platte angeordnet ist, wobei die drehbare, indirekt beheizbare Platte und die Haube den Innenraum des Erhitzers definieren. Bevorzugt ist die Vorrichtung so konstruiert, dass das Trägergas aus der Umgebungsluft entnommen werden kann. Die Vorrichtung kann so abgedichtet sein, dass keine Luft unreguliert von außen nach innen eindringen und kein quecksilberhaltiges Trägergas austreten kann. So ist der Innenraum des Erhitzers nach außen vorzugsweise durch eine Wasserdichtung abgedichtet. Dabei weist das drehbare Unterteil des Erhitzers, das die indirekt beheizbare Platte beinhaltet, am Rand eine Wasserrinne auf, in die ein an der feststehenden Haube randständig angeordnetes umlaufendes Blech eintaucht. Vorzugsweise befinden sich im Erhitzer, beispielsweise in einer umlaufenden Seitenwand oder in der Haube, Öffnungen durch die das Trägergas in den Innenraum des Erhitzers gelangen kann. Vorzugsweise sind die Öffnungen regulierbar und beispielsweise mit Blenden versehen, um die Zuführung des Trägergases regulieren zu können.

Die gemäß der vorliegenden Erfindung von Staubaufwirbelung freie oder quasi freie indirekte Erwärmung und der Transport des Filterstaubes während der Desorption bzw. Entfernung des Quecksilbers im Erhitzer und Abführung mittels angesaugter Luft bzw. mittels angesaugtem Trägergas aus dem Erhitzer bedingt relativ kleine Strömungsvolumina. Auf diese Weise können die entsprechenden Einrichtungen, wie der Erhitzer sowie der nachfolgende Reaktor zur Abscheidung von Quecksilber aus dem Trägergas, für entsprechend kleine Strömungsvolumina mit daraus resultierenden kleinen Bauvolumen ausgelegt werden. Dadurch lässt sich außerdem auch eine Verringerung des Energieverbrauchs erzielen. Insbesondere ist bedeutsam, dass gemäß der Erfindung eine Staubaufwirbelung bei dem Transport des Filterstaubs durch den Erhitzer zum großen Teil oder gar ganz vermieden wird. Aus diesem Grund enthält das aus dem Erhitzer kommende quecksilberhaltige Trägergas keine oder nur eine sehr geringe Staubladung. Dem Erhitzer ist bevorzugt keine Vorrichtung zur Staubabscheidung, wie Staubfilter und Zyklone, nachgeordnet, da der Staub im Erhitzer nicht und nur wenig aufgewirbelt wird und somit eine Entstaubung des quecksilberhaltigen Trägergases nicht notwendig ist. Bei Austritt aus dem Erhitzer enthält das quecksilberhaltige Trägergas vorzugsweise weniger als 10 mg/Nm³, 5 mg/Nm³, weniger als 4 mg/Nm³, weniger als 3 mg/Nm³, weniger als 2 mg/Nm³, und vorzugsweise weniger als 1 mg/Nm³ Staub.

In einer bevorzugten Ausführungsform ist der Erhitzer ein Drehherdofen. Dabei kann der Drehherdofen wesentlich kleiner und kostengünstiger gestaltet sein als die anderweitig benötigte Bauform üblicher Drehherdöfen, da nur relativ niedrige Temperaturen erreicht werden. Der Drehherdofen kann dabei einen Querschnitt von 2 bis 8 m, vorzugsweise 3 bis 7 m, weiter vorzugsweise 3 bis 6 m, und besonders bevorzugt 4 bis 5 m aufweisen. Die zentrale Entladeöffnung kann einen Querschnitt von 20 bis 100 cm, vorzugsweise 20 bis 50 cm besitzen. Der Filterstaub kann durch eine (bezogen auf die drehbare Platte) periphere Beladeöffnung im Erhitzer bzw.

Dreherdofen von oben durch ein Zuführrohr herab auf den Rand der drehbaren, indirekt beheizbaren Platte des Erhitzers bzw. Drehherdofens gegeben werden. Der Filterstaub wird anschließend durch Umlenkschaufeln infolge einer ständigen Drehbewegung der Platte umgewälzt und in Richtung der zentralen Entladeöffnung befördert, wobei der Filterstaub indirekt auf mindestens 250 °C, bevorzugt mindestens 300 °C, bevorzugt mindestens 400 °C, vorzugsweise 300 °C bis 500 °C, weiter vorzugsweise 350 °C bis 400 °C, erhitzt wird, wodurch das Quecksilber gasförmig aus dem Staub heraus entweicht. Vorzugsweise entweicht ein Großteil oder das gesamte im Filterstaub angereicherte Quecksilber. Die Verweilzeit des Filterstaubes im Drehherdofen lässt sich durch die Geschwindigkeit der Drehung der drehbaren, indirekt beheizten Platte und durch die Zugabemenge des Filterstaubes regulieren, wodurch eine quantitative Entfernung des Quecksilbers aus dem Filterstaub möglich ist.

Wie oben erläutert, weist der Erhitzer eine zum Zentrum hin geneigte drehbare, indirekt beheizbare Platte auf, die in einer bevorzugten Ausführungsform nach innen zum Zentrum hin eine Neigung von 2° bis 20°, bevorzugt 3° bis 15°, weiterhin bevorzugt 5° bis 10° aufweist. Somit ist die drehbare, indirekt beheizbare Platte des Erhitzers leicht trichterförmig ausgebildet. Die drehbare, indirekt beheizbare Platte des Erhitzers ist um eine senkrechte Achse drehbar. Der Filterstaub wird durch eine - bezogen auf die drehbare Platte - periphere Beladeöffnung im Erhitzer von oben durch ein Zuführrohr herab auf den Rand der drehbaren, indirekt beheizbaren Platte des Erhitzers gegeben. Aufgrund dieser Bauweise verläuft bzw. beginnt die zentrale Entladeöffnung des Erhitzers im Zentrum der genannten drehbaren, indirekt beheizbaren Platte. Die Drehachse dieser Platte verläuft durch diese zentrale Entladeöffnung des Erhitzers bzw. der Platte. Der Filterstaub wird auf der Oberseite der drehbaren, indirekt beheizbaren Platte von der Beladeöffnung in Richtung der zentralen Entladeöffnung durch den Erhitzer befördert.

In einer bevorzugten Ausführungsform wird die drehbare, indirekt beheizbare Platte mit Abwärme aus dem Zementherstellungsprozess vorgewärmt. Vorzugsweise wird im Erhitzer als Wärmeträgermedium eine Prozess-Abluft, ein Bypassstrom mit heißem Rauchgas aus der Zementklinkerherstellung, heißer Dampf oder elektrischer Strom eingesetzt.

Wie oben erläutert, wird zum Abtransport des aus dem Filterstaub ausgetriebenen Quecksilbers ein Trägergas in den Erhitzer bzw. den Drehherdofen geleitet. Das Trägergas wird vorzugsweise durch ein von einem Sauggebläse ausgehenden Saugzug durch das Innere des Erhitzers hindurchgesaugt, so dass die im Erhitzer entstehenden Quecksilber enthaltenden Dämpfe im Wesentlichen ohne Staub aus dem Erhitzer ausgetragen und dem nachfolgend angeordneten Reaktor zur Quecksilberabscheidung zugeführt werden.

In einer bevorzugten Ausführungsform ist eine Einrichtung zur Vorwärmung des Trägergases auf mindestens 100 °C, vorzugsweise mindestens 150 °C, bevorzugt mindestens 200 °C und weiter bevorzugt mindestens 250 °C vor Eintritt des Trägergases in den Erhitzer angeordnet. Somit kann das vorgewärmte Trägergas direkt mit Eintritt in den Erhitzer das gasförmige Quecksilber aufnehmen. Infolgedessen kann die Verweilzeit des Trägergases im Erhitzer reduziert werden, beispielsweise indem der Querschnitt des Erhitzers verringert wird.

In einer weiteren bevorzugten Ausführungsform wird das Trägergas mit Abwärme aus dem Zementherstellungsprozess erwärmt, beispielsweise durch die Abwärme der Vorwärmstufe oder einer Klinkerkühlung.

In einer weiteren bevorzugten Ausführungsform erfolgt der Eintritt des Trägergases in den Erhitzer im Bereich bzw. in der Nähe des äußeren Randes der drehbaren, indirekt beheizbaren Platte, vorzugsweise über Eintrittsöffnungen, die in einer über der Platte angeordneten Haube vorgesehen sind. Der Eintritt des Trägergases erfolgt dabei vorzugsweise über im Wesentlichen den ganzen äußeren Rand der drehbaren, indirekt beheizbaren Platte verteilt.

Wie oben erläutert, ist weiterhin bevorzugt, dass der Erhitzer eine Haube aufweist, die über der drehbaren, indirekt beheizbaren Platte angeordnet ist, wobei die Platte und die Haube den Innenraum des Erhitzers definieren, und sich unter der zentralen Entladeöffnung ein Fallschacht befindet, der zum Innenraum des Erhitzers hin abdichtbar oder abgedichtet ist, so dass kein gasförmiges Quecksilber entweichen kann. Das Trägergas, welches vorzugsweise vorgewärmt ist, gelangt in einer bevorzugten Ausführungsform durch Öffnungen in der Haube in den Erhitzer. Die Abdichtung des Fallschachts kann bevorzugt durch den Filterstaub selbst erreicht werden. Beispielsweise dichtet der Filterstaub den Fallschacht nicht komplett gasdicht ab, so dass ein geringer Luftstrom von unten durch den Filterstaubpfropfen in den Erhitzer hinein gelangen kann und somit letzte Reste des ausgetriebenen Quecksilbers mitgenommen und mit dem Trägergas ausgeleitet werden.

Gemäß einer weiteren Ausführungsform der Vorrichtung ist bevorzugt vorgesehen, dass zwischen dem Erhitzer und dem Reaktor zur Abscheidung von Quecksilber eine Einrichtung zur Abkühlung des quecksilberhaltigen Trägergases angeordnet ist. Diese stellt eine Abkühlung des quecksilberhaltigen Trägergases sicher, vorzugsweise auf 100 °C bis 250 °C, weiter vorzugsweise 120 °C bis 200 °C und sorgt in einer bevorzugten Ausführungsform dafür, dass kein gasförmiges Quecksilber im Trägergas verbleibt, sondern weitestgehend im Reaktor zur Abscheidung von Quecksilber abgeschieden wird. Die Anreicherung des Quecksilbers im Zementherstellungsprozess kann so weiter reduziert werden.

In einer bevorzugten Ausführungsform der Vorrichtung ist als Reaktor zur Abscheidung von Quecksilber ein Festbettadsorber oder ein Wanderbettadsorber oder ― absorber angeordnet. Es können jedoch auch andere Reaktoren zur Abscheidung von Quecksilber eingesetzt werden. Der Reaktor zur Abscheidung von Quecksilber enthält vorzugsweise ein Adsorbens, besonders bevorzugt wird ein Adsorbens eingesetzt, das ausgewählt ist aus der Gruppe bestehend aus inertem Trägermaterial mit aktiver Beschichtung, auf Kohlenstoff basierte Partikel, insbesondere Aktivkohle, Zeolithen, Kalkprodukten, Ionenaustauscherharzen und Mischungen davon. Insbesondere ist die Verwendung von Adsorbentien (vorzugsweise Aktivkohle und Aktivkoks) bevorzugt, die mit Halogeniden, wie Brom und Jod, ferner aber auch mit Schwefel imprägniert bzw. dotiert sein können. Auf diese Weise kann elementares Quecksilber oxidiert und absorbiert statt nur adsorbiert werden.

Der nach der Erhitzung aus dem Erhitzer geführte Quecksilber-abgereicherte Filterstaub enthält bevorzugt weniger als 0.1 mg Quecksilber pro kg Filterstaub, vorzugsweise weniger als 0.01 mg Quecksilber pro kg Filterstaub, weiter vorzugsweise weniger als 0.001 mg Quecksilber pro kg Filterstaub.

In einer bevorzugten Ausführungsform ist der Quecksilber-abgereicherte Filterstaub in die Vorwärmstufe, Rohmehlmühle oder ein Vorratssilo beförderbar. In einer weiteren bevorzugten Ausführungsform ist Quecksilber-abgereichertes Trägergas in die Vorwärmstufe, Rohmehlmühle oder ein Vorratssilo beförderbar. Als alternative Ausführungsform ist die Rückführung des Quecksilber-abgereicherten Filterstaubs und/oder des Quecksilber-abgereicherten Trägergases jedoch auch in eine andere geeignete Stelle im Zementherstellungsprozess möglich. Zwischen der zentralen Entladeöffnung des Erhitzers und der Rohmehlmühle, der Vorwärmstufe oder einem Vorratssilo ist, als bevorzugte Ausführungsform, ein Kreislauf für den Quecksilber-abgereicherten Filterstaub gebildet.

In einer beispielhaften, der Erfindung entsprechenden Vorrichtung und dem unten beschriebenen entsprechenden Verfahren wird der quecksilberhaltige Filterstaub aus der Filterstufe, beispielsweise einem Schlauchfilter, des Zementwerkes von oben herab auf die Außenbahn der Drehherdofen-Platte aufgegeben. Das Trägergas gelangt vorzugsweise vorgewärmt durch Öffnungen, seitliche Löcher oder Schlitze in der Seitenwand oder in der Haube in den Erhitzer bzw. Drehherdofen hinein. Der aufgegebene Filterstaub wird im Drehherdofen auf der drehenden, zum Zentrum hin geneigte Platte von Rille zu Rille durch die in der Haube eingesteckten starren Umlenkschaufeln immer wieder eine Stufe nach innen hin umgewälzt und wandert so durch den Drehherdofen hindurch. Dabei wird der Filterstaub von unten indirekt durch die Platte auf mindestens 250 °C, vorzugsweise 300 °C bis 500 °C aufgeheizt, wodurch fast das gesamte Quecksilber aus dem Filterstaub ausgetrieben wird. Das Quecksilber dunstet nach oben hin aus und wird von dem im Innenraum des Drehherdofens sehr langsam strömenden Trägergas mitgenommen, um schließlich zentral über ein Abführrohr aus dem Erhitzer ausgetragen zu werden. Der vom Quecksilber befreite Filterstaub fällt schließlich in der Mitte des Drehherdofens in einen Fallschacht und sackt dort langsam in dem leicht konischen Austragsschacht weiter nach unten. Am untersten Ende schließlich wird der Filterstaub aus dem Drehherdofen ausgetragen. Dies geschieht wahlweise über eine Zellenradschleuse, ein Förderband oder eine Schnecke. Dieser so behandelte Filterstaub kann dann dem Zementprozess als Wertstoff oder Gut wieder zugeführt werden, wahlweise in die Vorwärmstufe, in die Rohmehlmühle oder in den Kalzinierprozess zum nochmaligen Brennen. Das aus dem Drehherdofen austretende Trägergas, welches das ausgetriebene Quecksilber als elementares Quecksilber aber auch in unterschiedlichen Verbindungen enthält, wird mittels Saugzuggebläse durch einen Reaktor zur Abscheidung des Quecksilbers, wie beispielsweise einen Festbettfilter mit ggf. dotierter Aktivkohle geleitet, das den größten Teil des Quecksilbers adsorbiert und ggf. absorbiert. Das so gereinigte saubere Trägergas wird wieder in den Zementprozess, zum Beispiel in den Bereich der Zyklone, zurückgeleitet. Zudem kann der Drehherdofen so abgedichtet sein, dass Luft nicht durch ggf. vorhandene Leckagen von außen nach innen eindringen bzw. quecksilberhaltiges Gas nach außen austreten kann. Dies kann erreicht werden, indem der Drehherdofen in einer Wassertasse läuft, das heißt einem umlaufenden Ring als Wassergraben, in den von oben ein ebenfalls umlaufendes Wehr aus Edelstahlblech eintaucht. Üblicherweise arbeitet ein Drehherdofen durch ein nachfolgendes Saugzuggebläse unter leichtem Unterdruck. Vorzugsweise befinden sich an der umlaufenden Seitenwand oder in der Haube des Drehherdofens kleine Öffnungen an die jeweils Anschlussrohre angebracht sind und durch die das vorgewärmte Trägergas in den Innenraum des Drehherdofens eindringen kann. Diese Öffnungen können optional mit verstellbaren Blenden versehen sein, damit die Zuführung des Trägergases reguliert werden kann.

Für die Vorrichtung dieser Ausführungsform finden die entsprechenden bevorzugten Merkmale der vorhergehenden Ausführungsform ebenso Anwendung.

Die technische Aufgabe wird weiterhin gelöst durch ein Verfahren zur Abscheidung von Quecksilber und/oder Quecksilberverbindungen aus bei der Zementklinkerherstellung im Abgas anfallendem Filterstaub, wobei Rohmaterialien im Gegenstromprinzip gegen die Richtung der Strömung der Abgase in eine Vorwärmstufe gegeben, und nach Aufwärmen in der Vorwärmstufe in einem Drehrohrofen zur Klinkerherstellung gebrannt werden, wobei durch die Aufwärmung der Rohmaterialien das in den Rohmaterialien gebundene Quecksilber verdampft und die quecksilberhaltigen Abgase vor dem Austritt in die Atmosphäre in zumindest einer Filterstufe entstaubt werden, wobei mindestens ein Teil des Quecksilbers am abgeschiedenen Filterstaub gebunden ist, der in der Filterstufe abgeschiedene quecksilberhaltige Filterstaub in einem Erhitzer auf mindestens 250 °C erhitzt wird, wobei das Quecksilber gasförmig aus dem Filterstaub ausgetrieben wird, und das gasförmige Quecksilber mit einem durch den Erhitzer geführten Trägergas ausgetragen wird, wobei erfindungsgemäß
der Erhitzer mit peripherer Beladeöffnung und zentraler Entladeöffnung für den in der Filterstufe erhaltenen Filterstaub ausgestattet ist und eine zum Zentrum hin geneigte, sich um eine senkrechte Achse drehende, indirekt beheizte Platte umfasst,
wobei der Filterstaub auf der Oberseite der sich drehenden, indirekt beheizten Platte durch den Erhitzer von der Beladeöffnung in Richtung der zentralen Entladeöffnung befördert wird, und das quecksilberhaltige Trägergas aus dem Erhitzer zu einem Reaktor zur Abscheidung von Quecksilber geleitet und das Quecksilber abgeschieden wird.

Bei diesem erfindungsgemäßen Verfahren wird der kleinste Volumenstrom, in welchem das Quecksilber konzentriert vorliegt, behandelt. Es muss dabei nicht ein Teilstrom des Abgases abgezweigt werden, sondern es kann durch das erfindungsgemäße Verfahren ein Großteil des im gesamten Abgasstrom vorkommenden Quecksilbers abgeschieden werden. Die vorliegende Erfindung behandelt somit nicht das quecksilberhaltige Abgas, sondern lediglich das staubhaltige Material, das auf bekannte Weise in einem Filter abgeschieden wird.

Die Temperatur des quecksilberhaltigen Abgases wird, in einem bevorzugten Verfahren, vor der Filterstufe gesenkt, vorzugsweise auf 100 °C bis 250 °C, weiter vorzugsweise auf 120 C bis 200 °C, um die Anreicherung des Quecksilbers im Filterstaub zu optimieren.

In dem Verfahren erfolgt gemäß der Erfindung die Austreibung des Quecksilbers aus dem Filterstaub durch Erhitzen in dem Erhitzer. Dabei wird das im Filterstaub enthaltene Quecksilber durch schonendes Erhitzen des Staubes auf mindestens 250 °C, bevorzugt mindestens 300 °C, bevorzugt mindestens 400 °C, vorzugsweise 300 °C bis 500 °C, weiter vorzugsweise 350 °C bis 400 °C ausgedampft.

Zum Abtransport des ausgetriebenen Quecksilbers aus dem Erhitzer wird erfindungsgemäß ein Trägergasstrom verwendet. In einem bevorzugten Verfahren streicht das Trägergas langsam über den erhitzten Filterstaub, um das gasförmige Quecksilber, welches elementar oder in unterschiedlichen Verbindungen vorliegen kann, auszutragen. In einem weiteren bevorzugten Verfahren beträgt die Geschwindigkeit des Trägergases in dem Erhitzer von bis zu 10 cm/s, vorzugsweise von bis zu 5 cm/s, weiter bevorzugt von bis zu 1 cm/s, wobei diese Geschwindigkeit vorzugsweise am Rand der sich drehenden, indirekt beheizten Platte des Erhitzers gemessen wird. Die geringe Geschwindigkeit des Trägergases ermöglich es, das Verfahren so auszuführen, dass kein oder nur sehr wenig Staub in dem Erhitzer aufgewirbelt und mit dem Trägergas ausgetragen wird. Daher wird vorzugsweise das quecksilberhaltige Trägergas nach Austritt aus dem Erhitzer nicht entstaubt. Um dies zu erreichen, enthält das quecksilberhaltige Trägergas bei Austritt aus dem Erhitzer vorzugsweise weniger als 10 mg/Nm³, 5 mg/Nm³, weniger als 4 mg/Nm³, weniger als 3 mg/Nm³, weniger als 2 mg/Nm³, oder vorzugsweise weniger als 1 mg/Nm³ Staub.

In einem weiteren bevorzugten Verfahren enthält der Quecksilber-abgereicherte Filterstaub nach der Erhitzung bevorzugt weniger als 0.1 mg Quecksilber pro kg Filterstaub, vorzugsweise weniger als 0.01 mg Quecksilber pro kg Filterstaub, weiter vorzugsweise weniger als 0.001 mg Quecksilber pro kg Filterstaub.

In einem besonders bevorzugten Verfahren wird als Erhitzer ein Drehherdofen verwendet. Wie oben bereits erwähnt, wird der quecksilberhaltige Filterstaub durch eine periphere Beladeöffnung von oben durch ein Zuführrohr herab auf den Rand der sich drehenden, indirekt beheizten Platte des Erhitzers gegeben. Der Filterstaub wird durch Umlenkschaufeln infolge der ständigen Drehbewegung der Platte umgewälzt, indirekt und gleichmäßig auf mindestens 250 °C, mindestens 300 °C, vorzugsweise 300 °C bis 500 °C, weiter vorzugsweise 350 °C bis 400 °C erhitzt und in Richtung der zentralen Entladeöffnung befördert. Dabei entweichen das Quecksilber und/oder seine Verbindungen gasförmig. Vorzugsweise entweicht ein Großteil oder das gesamte im Filterstaub angereicherte Quecksilber. Eine quantitative Entfernung des Quecksilbers wird erreicht, indem die Verweilzeit des Filterstaubes auf dem Drehherdofen durch die Geschwindigkeit der Drehung der indirekt beheizten Platte und durch die Zugabemenge des Filterstaubes reguliert wird. Der Drehherdofen kann durch eine schnellere Drehung einen größeren Durchsatz erreichen als beispielsweise ein Drehrohrofen. In einem Drehrohrofen kann der Durchsatz des Filterstaubes durch eine schnellere Drehung erreicht werden, diese schnellere Drehung bewirkt jedoch eine größere Aufwirbelung des Staubes, welcher dann mit dem quecksilberhaltigen Trägergas abtransportiert wird und entweder durch eine weitere Vorrichtung zur Entstaubung zurückgewonnen werden muss oder zusammen mit dem Quecksilber abgeschieden wird und folglich verloren geht. In vorteilhafter Weise kann der Drehherdofen einen höheren Staubdurchsatz und eine quantitative Entfernung des Quecksilbers erreichen ohne dabei jedoch mehr Staub aufzuwirbeln.

In einem bevorzugten Verfahren wird in dem Erhitzer eine sich drehende, indirekt beheizte Platte verwendet, die nach innen zum Zentrum hin eine Neigung von 2° bis 20°, bevorzugt 3° bis 15°, weiterhin bevorzugt 5° bis 10°, aufweist.

In einem weiteren bevorzugten Verfahren wird die sich drehende, indirekt beheizte Platte mit Abwärme aus dem Zementherstellungsprozess erwärmt. Vorzugsweise wird im Erhitzer als Wärmeträgermedium eine Prozess-Abluft, ein Bypassstrom mit heißem Rauchgas aus der Zementklinkerherstellung, heißer Dampf oder elektrischer Strom eingesetzt.

In einem bevorzugten Verfahren wird das Trägergas vor Eintritt in den Erhitzer auf mindestens 100 °C, vorzugsweise mindestens 150 °C, bevorzugt mindestens 200 °C und besonders bevorzugt mindestens 250 °C erwärmt. Die Vorwärmung des Trägergases bewirkt, dass das gasförmige Quecksilber direkt bei Eintritt des Trägergases in den Erhitzer aufgenommen wird. Idealerweise kann somit der Querschnitt des Erhitzers verringert werden.

In einem weiteren bevorzugten Verfahren wird das Trägergas durch die Abwärme aus dem Zementherstellungsprozess erwärmt, beispielsweise durch die Abwärme der Vorwärmstufe oder der Klinkerkühlung.

Gemäß einem weiteren bevorzugten Verfahren erfolgt der Eintritt des Trägergases in den Erhitzer im Bereich bzw. in der Nähe des äußeren Randes der sich drehenden, indirekt beheizten Platte, vorzugsweise über Eintrittsöffnungen, die in einer über der Platte angehordneten Haube vorgesehen sind. Der Eintritt des Trägergases erfolgt dabei vorzugsweise über im Wesentlichen den ganzen äußeren Rand der sich drehenden, indirekt beheizten Platte verteilt.

In einem weiteren bevorzugten Verfahren weist der Erhitzer eine Haube auf, die über der sich drehenden, indirekt beheizten Platte angeordnet ist, wobei die Platte und die Haube den Innenraum des Erhitzers definieren. Weiterhin kann sich unter der Entladeöffnung vorzugsweise ein Fallschacht befinden, der zum Innenraum des Erhitzers hin abdichtbar oder abgedichtet ist, so dass kein gasförmiges Quecksilber entweichen kann. Vorzugsweise gelangt das Trägergas durch Öffnungen in der Haube in den Erhitzer, wobei besonders bevorzugt ist, dass das Trägergas vor Eintritt in den Erhitzer vorgewärmt wird. Die Abdichtung des Fallschachts kann bevorzugt durch den Filterstaub selbst erreicht werden. Beispielsweise dichtet der Filterstaub den Fallschacht nicht komplett gasdicht ab, so dass ein geringer Luftstrom von unten durch den Filterstaubpfropfen in den Erhitzer hinein gelangen kann und somit letzte Reste des ausgetriebenen Quecksilbers mitgenommen und mit dem Trägergas ausgeleitet werden.

Gemäß der Erfindung wird das aus dem Erhitzer kommende mit Quecksilber beladene Trägergas einem Reaktor zur Abscheidung von Quecksilber aus dem Trägergas zugeführt.

In einem bevorzugten Verfahren wird die Temperatur des quecksilberhaltigen Trägergases vor dem Reaktor zur Abscheidung von Quecksilber gesenkt, vorzugsweise auf 100 °C bis 250 °C, weiter vorzugsweise auf 120 °C bis 200 °C.

In einem bevorzugten Verfahren ist der Reaktor zur Abscheidung von Quecksilber ein Festbettadsorber oder ein Wanderbettadsorber oder -absorber. Es können jedoch auch andere Reaktoren zur Abscheidung von Quecksilber eingesetzt werden. Der Reaktor zur Abscheidung von Quecksilber enthält vorzugsweise ein Adsorbens, besonders bevorzugt wird ein Adsorbens eingesetzt, das ausgewählt ist aus der Gruppe bestehend aus inertem Trägermaterial mit aktiver Beschichtung, auf Kohlenstoff basierte Partikel, insbesondere Aktivkohle, Zeolithen, Kalkprodukten, Ionenaustauscherharzen und Mischungen davon. Insbesondere ist die Verwendung von Adsorbentien (vorzugsweise Aktivkohle und Aktivkoks) bevorzugt, die mit Halogeniden, wie Brom und Jod, ferner aber auch mit Schwefel imprägniert bzw. dotiert sein können. Auf diese Weise kann elementares Quecksilber oxidiert und absorbiert statt nur adsorbiert werden.

Bevorzugt wird vor der Entstaubung des Abgases, sowie vor der Rückführung des Filterstaubes kein quecksilberbindendes Additiv, beispielsweise Aktivkohle oder Erdalkalisulfide, zugegeben, folglich wird kein Additiv in den Zementherstellungsprozess geleitet. Weiterhin bevorzugt wird dem quecksilberhaltigen Trägergas kein quecksilberbindendes Additiv zugegeben, so dass das Trägergas nicht von Additiven gereinigt werden muss.

In einem bevorzugten Verfahren wird, wie oben bereits erwähnt, der Quecksilber-abgereicherte Filterstaub von der Entladeöffnung des Erhitzers zu einer Rohmehlmühle, der Vorwärmstufe oder einem Vorratssilo zurückgeführt. In einem bevorzugten Verfahren wird Quecksilber-abgereichertes Trägergas in eine Rohmehlmühle, der Vorwärmstufe oder einem Vorratssilo geführt. Als alternative Ausführungsform ist die Rückführung des Quecksilber-abgereicherten Filterstaubs und/oder des Quecksilber-abgereicherten Trägergases jedoch auch in eine andere geeignete Stelle im Zementherstellungsprozess möglich.

Die technische Aufgabe wird weiterhin durch die Verwendung eines Erhitzers zur Abscheidung von Quecksilber und/oder Quecksilberverbindungen aus bei der Zementklinkerherstellung im Abgas anfallendem Filterstaub gelöst, der Erhitzer mit peripherer Beladeöffnung und zentraler Entladeöffnung für den Filterstaub ausgestattet ist und eine zum Zentrum hin geneigte, um eine senkrechte Achse drehbare, indirekt beheizbare Platte umfasst, wobei gemäß der Erfindung der Filterstaub auf der Oberseite der drehbare, indirekt beheizbaren Platte durch den Erhitzer von der Beladeöffnung in Richtung der zentralen Entladeöffnung befördert wird, und ein Trägergas durch den Erhitzer über den Filterstaub geführt wird, um das gasförmige Quecksilber aus dem Erhitzer auszutragen. In einer bevorzugten Verwendung ist der Erhitzer ein Drehherdofen.

Die technische Aufgabe wird weiterhin durch die Verwendung eines Drehherdofens zur Abscheidung von Quecksilber und/oder Quecksilberverbindungen aus bei der Zementklinkerherstellung im Abgas anfallenden Filterstaub gelöst.

Weiterhin stellt die vorliegende Erfindung einen Erhitzer bereit zur gasförmigen Austreibung von Quecksilber und/oder Quecksilberverbindungen aus bei der Zementklinkerherstellung im Abgas anfallendem Filterstaub, wobei
der Erhitzer eingerichtet ist zum Aufheizen des quecksilberhaltigen Filterstaubes auf mindestens 250 °C,
der Erhitzer mit peripherer Beladeöffnung und zentraler Entladeöffnung für den erhaltenen Filterstaub ausgestattet ist und eine zum Zentrum hin geneigte, um eine senkrechte Achse drehbare, indirekt beheizbare Platte umfasst,
der Filterstaub auf der Oberseite der drehbaren, indirekt beheizbaren Platte durch den Erhitzer von der Beladeöffnung in Richtung der zentralen Entladeöffnung beförderbar ist,
der Erhitzer eine Haube aufweist, die über der drehbaren, indirekt beheizbaren Platte angeordnet ist, wobei die Platte und die Haube den Innenraum des Erhitzers definieren,
und wobei der Erhitzer eingerichtet ist, ein Trägergas durch den Erhitzer über den Filterstaub zu führen, zur Austragung des gasförmigen Quecksilbers aus dem Erhitzer, wobei optional eine Einrichtung zur Vorwärmung des Trägergases auf mindestens 100 °C vor Eintritt des Trägergases in den Erhitzer angeordnet ist.

In einer bevorzugten Ausführungsform des erfindungsgemäßen Erhitzers, ist die Einrichtung zur Vorwärmung des Trägergases konstruiert, das Trägergas vor Eintritt in den Erhitzer auf mindestens 150 °C, bevorzugt mindestens 200 °C und besonders bevorzugt mindestens 250 °C vorzuwärmen. Somit kann das vorgewärmte Trägergas direkt mit Eintritt in den Erhitzer das gasförmige Quecksilber aufnehmen.

In einer bevorzugten Ausführungsform des erfindungsgemäßen Erhitzers befinden sich an der umlaufenden Seitenwand oder insbesondere bevorzugt in der Haube des Erhitzers Öffnungen durch die das vorgewärmte Trägergas aus der Einrichtung zur Vorwärmung des Trägergases in den Innenraum des Erhitzers einströmen kann. Diese Öffnungen sind vorzugsweise regulierbar, damit die Zuführung des Trägergases reguliert werden kann. Weitere bevorzugte und vorteilhafte Ausführungsformen, sofern diese den Erhitzer bzw. Drehherdofen selbst betreffen, sind bereits oben im Rahmen der Erfindung betreffend die Vorrichtung und das Verfahren zur Abscheidung von Quecksilber beschrieben worden und finden bei dem erfindungsgemäßen Erhitzer ebenfalls bevorzugt Anwendung.

Die vorliegende Erfindung wird anhand der beigefügten Zeichnungen näher erläutert.

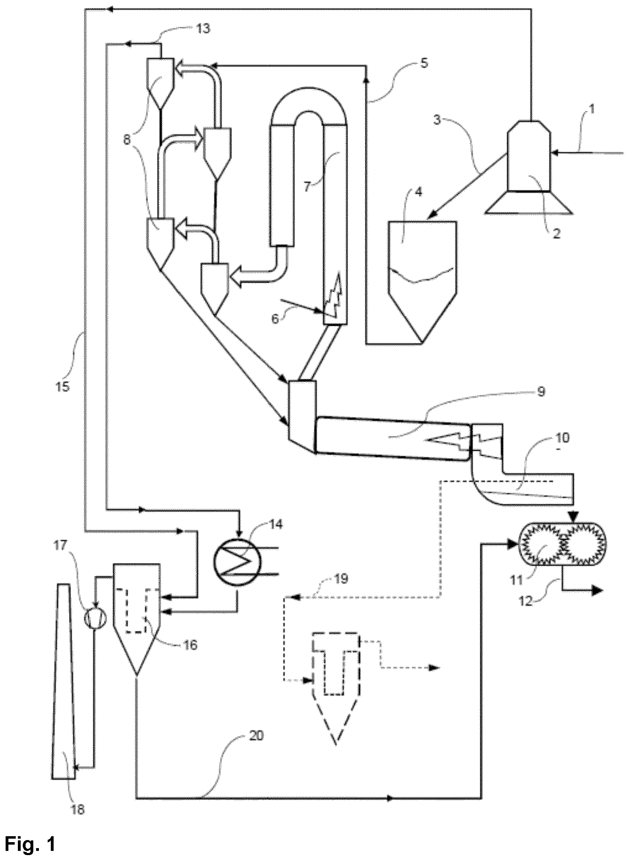

**Figur** 1 zeigt ein Blockschaltbild einer herkömmlichen Vorrichtung zur Zementklinkerherstellung. Die für die Zementklinkerherstellung benötigen Rohmaterialien 1 werden zur Mahltrocknung in eine Rohmehlmühle 2 gegeben. Vorgemahlenes Rohmehl 3 wird, gegebenenfalls über ein Vorratssilo 4, als Rohmehlmassenstrom 5 zum Kalzinierungsprozess geleitet. Dieser Rohmehlmassenstrom 5 wird im Gegenstromprinzip gegen die Richtung der Strömung der Abgase in eine Vorwärmstufe 8, hier eine Heißzyklon-Kaskade, aufgegeben, von der aus der Rohmehlmassenstrom 5 weiter, über einen Drehrohrofen zur Klinkerherstellung 9, in einen Klinkerkühler 10 und weiter in eine Klinkermühle 11 zur Herstellung des fertigen Zementpulvers befördert wird, wonach anschließend fertiges Zementmehl 12 vorliegt. Des Weiteren kann sich typischerweise zwischen dem Drehrohrofen 9 und der Vorwärmstufe 8 ein Kalzinator 7 einschließlich einer Zusatzfeuerung 6, bzw. Stützfeuerung, befinden. In diesem Kalzinierungsprozess fällt ein staubhaltiges heißes Abgas 13 an, welches über einen Kühler 14 abgekühlt und in einer Filterstufe, beispielsweise einem Staub-Gewebefilter 16, entstaubt wird. Zusätzlich fällt an der Rohmehlmühle 2 ein rohmehlstaubhaltiges Abgas 15 an, das ebenfalls in der Filterstufe 16 entstaubt wird. Daneben kann ein staubhaltiger Abgas 19 in dem Klinkerkühler 10 anfallen, welches in die Filterstufe 16 geleitet und dort gleichermaßen entstaubt werden kann. Die entstaubten Abgase gelangen über ein Saugzuggebläse 17 und einen Kamin 18 in die Atmosphäre. Der in der Filterstufe 16 abgeschiedene Filterstaub 20 enthält, durch eine Abkühlung auf ca. 120 °C bis 200 °C, einen Großteil des zuvor in den Abgasen transportierten Quecksilbers. Üblich ist die Rückführung des quecksilberhaltigen Filterstaubes 20 wie hier dargestellt in die am Ende befindliche Klinkermühle oder in den Kalzinierungsprozess in das Vorratssilo 4. Gemäß dieser Verfahrensweise gelangt das Quecksilber in den Zementklinkerstaub oder wird sogar dort angereichert.

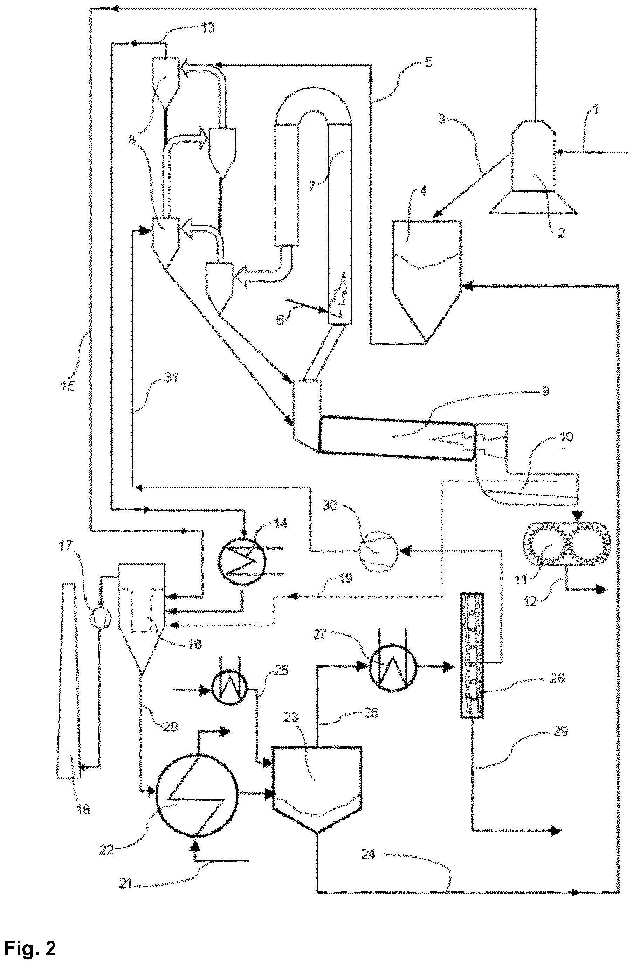

**Figur 2** zeigt ein Blockschaltbild einer Vorrichtung zur Zementklinkerherstellung basierend auf dem Blockschaltbild der Fig. 1, wobei zusätzlich die Abscheidung von Quecksilber bzw. Quecksilberverbindungen gemäß der Erfindung vorgesehen ist. Statt den quecksilberhaltigen Filterstaub 20 in den Kalzinierungsprozess zurückzuführen wird erfindungsgemäß der quecksilberhaltige Filterstaub 20 in einem Wärmetauscher oder Erhitzer 22 indirekt auf ca. 350 °C bis 400 °C erhitzt, wobei ein Wärmeträgermedium 21, beispielsweise eine Prozess-Abluft, ein Bypassstrom mit heißem Rauchgas aus der Zementklinkerherstellung oder heißer Dampf eingesetzt wird. Als Wärmetauscher 22 wird in der dargestellten Vorrichtung ein Drehherdofen eingesetzt, der den quecksilberhaltigen Filterstaub 20 langsam von außen nach innen rillenweise transportiert und umschichtet, wobei das Quecksilber gasförmig ausgetrieben wird. Weiterhin weist der Wärmetauscher 22 eine Abscheidefunktion 23 auf, so dass der heiß gewordene Quecksilber-abgereicherte Filterstaub 24 nach unten ausgetragen wird und in einer geeigneten Stelle im Kalzinierungsprozess, wie zum Beispiel in das Vorratssilo 4, zurückgeführt werden kann. Währenddessen tritt ein vorgewärmtes Trägergas 25 in der Erhitzer 22 ein um das gasförmige Quecksilber aufzunehmen, ohne dabei den Quecksilber-abgereicherten Filterstaub 24 aufzuwirbeln. Quecksilberhaltiges Trägergas 26 wird aus dem Erhitzer 22/23 ausgetragen. Ein nachgeschalteter Kühler 27 kühlt das ca. 350 °C bis 400 °C heiße quecksilberhaltige Trägergas 26 auf ca. 120 bis 150 °C ab. Das Quecksilber im quecksilberhaltigen Trägergas 26 wird in einem Reaktor 28 unter Verwendung von Aktivkohle, die brom-, schwefel- oder joddotiert sein kann, abgeschieden. Diese Quecksilber-belastete Aktivkohle wird zur Abfüllung ausgeschleust 29. Ein Förderluftgebläse 30 schleust das Quecksilber-abgereicherte Trägergas 31 an geeigneter Stelle zurück in den Zementklinkerherstellungsprozess, beispielsweise, wie hier dargestellt, in die Vorwärmstufe 8.

Die Vorteile der vorliegenden Erfindung ergeben sich daraus, dass aus einem möglichst kleinen Stoffstrom, in welchem das Quecksilber konzentriert vorliegt, dieser Schadstoff entfernt wird, wobei kein oder möglichst wenig Filterstaub dem Zementherstellungsprozess verloren geht.

### Bezugszeichenliste

- 1: Rohmehl
- 2: Rohmehlmühle
- 3: vorgemahlenes Rohmehl
- 4: Vorratssilo für gemahlenes Rohmehl und Filterstaub
- 5: Rohmehlmassenstrom vom Vorratssilo zum Kalzinierprozess
- 6: Zusatzfeuerung = Stützfeuerung, ggf. auch Zuschlagstoffe
- 7: Kalzinator oder "Wärmetauscher" mit Pyrotop
- 8: Heißzyklon-Kaskade
- 9: Drehrohrofen zur Klinkerherstellung
- 10: Klinkerkühler
- 11: Klinkermühle zur Herstellung des fertigen Zementpulvers
- 12: fertiges Produkt/Zementmehl zur Verpackung
- 13: staubhaltiges heißes Rauchgas zum Gewebefilter
- 14: Rauchgaskühler
- 15: rohmehlstaubhaltiger Luftstrom aus der Rohmehlmühle
- 16: Staub-Gewebefilter oder Elektrofilter
- 17: Saugzuggebläse
- 18: Kamin
- 19: ggf. zusätzlich staubhaltige Abluft aus dem Klinkerkühler zum Hauptfilter
- 20: quecksilberhaltiger Filterstaub
- 21: Wärmeträgermedium zum Aufheizen des Filterstaubes
- 22: Wärmetauscher/Erhitzer/Drehrohrofen
- 23: Abscheidefunktion innerhalb des Erhitzers/Drehherdofens
- 24: Quecksilber-abgereicherter Filterstaub
- 25: eintretendes, vorgewärmtes Trägergas
- 26: quecksilberhaltiges 350 °C bis 400 °C heißes Trägergas
- 27: nachgeschalteter Kühler
- 28: Reaktor zu Abscheidung von Quecksilber aus dem Trägergas
- 29: Ausschleusung der mit Quecksilber belasteten Aktivkohle
- 30: Förderluftgebläse zur Rückschleusung des Quecksilber-abgereicherten Trägergases zurück in den Haupt-Zementprozess
- 31: Rückführung von Hg-freiem Trägergas in die Zyklonbatterie

## Patentansprüche

1. Eine Vorrichtung zur Abscheidung von Quecksilber und/oder Quecksilberverbindungen aus bei der Zementklinkerherstellung im Abgas anfallendem Filterstaub (20), mit einer Vorwärmstufe (8), einer Aufgabe für die zur Zementklinkerherstellung benötigten Rohmaterialien (1, 3, 5) im Gegenstromprinzip gegen die Richtung der Strömung der Abgase in der Vorwärmstufe (8), einem Drehrohrofen zur Klinkerherstellung (9), und zumindest einer Filterstufe (16) zur Entstaubung der quecksilberhaltigen Abgase (13) vor Austritt in die Atmosphäre, wobei die Filterstufe (16) mit Quecksilber beladenen Filterstaub (20) bereitstellt, der Filterstufe (16) ein Erhitzer (22) zum Aufheizen des quecksilberhaltigen Filterstaubes (20) auf mindestens 250 °C zur gasförmigen Austreibung des Quecksilbers aus dem Filterstaub (20) nachgeordnet ist, und wobei der Erhitzer (22) eingerichtet ist, ein Trägergas (25) durch den Erhitzer (22) über den Filterstaub (20) zu führen, zur Austragung des gasförmigen Quecksilbers aus dem Erhitzer (22),
**dadurch gekennzeichnet, dass**
der Erhitzer (22) mit peripherer Beladeöffnung und zentraler Entladeöffnung (23) für den in der Filterstufe (16) erhaltenen Filterstaub (20) ausgestattet ist und eine zum Zentrum hin geneigte, um eine senkrechte Achse drehbare, indirekt beheizbare Platte umfasst,
der Filterstaub (20) auf der Oberseite der drehbaren, indirekt beheizbaren Platte durch den Erhitzer (22) von der Beladeöffnung in Richtung der zentralen Entladeöffnung (23) beförderbar ist,
und dem Erhitzer (22) zumindest ein Reaktor (28) zur Abscheidung von Quecksilber aus dem quecksilberhaltigen Trägergas (26) nachgeordnet ist.

2. Die Vorrichtung gemäß Anspruch 1, **dadurch gekennzeichnet, dass** der Erhitzer (22) ein Drehherdofen ist.

3. Die Vorrichtung gemäß Anspruch 1 oder 2, **dadurch gekennzeichnet, dass** dem Erhitzer (22) keine Vorrichtung zur Staubabscheidung nachgeordnet ist.

4. Die Vorrichtung gemäß irgendeinem der Ansprüche 1 bis 3, **dadurch gekennzeichnet, dass** eine Einrichtung zur Vorwärmung des Trägergases (25) auf mindestens 100 °C, vorzugsweise mindestens 150 °C, bevorzugt mindestens 200 °C und besonders bevorzugt mindestens 250 °C vor Eintritt des Trägergases (25) in den Erhitzer (22) angeordnet ist,
wobei insbesondere bevorzugt das Trägergas (25) mit Abwärme aus dem Zementherstellungsprozess vorgewärmt wird.

5. Die Vorrichtung gemäß irgendeinem der Ansprüche 1 bis 4, **dadurch gekennzeichnet, dass** die drehbare, indirekt beheizbare Platte mit Abwärme aus dem Zementherstellungsprozess erwärmt wird.

6. Die Vorrichtung gemäß irgendeinem der Ansprüche 1 bis 5, **dadurch gekennzeichnet, dass** der Erhitzer (22) eine Haube aufweist, die über der drehbaren, indirekt beheizbaren Platte angeordnet ist, wobei die Platte und die Haube den Innenraum des Erhitzers (22) definieren, und sich unter der zentralen Entladeöffnung (23) ein Fallschacht befindet, der zum Innenraum des Erhitzers (22) hin abdichtbar oder abgedichtet ist.

7. Ein Verfahren zur Abscheidung von Quecksilber und/oder Quecksilberverbindungen aus bei der Zementklinkerherstellung im Abgas anfallendem Filterstaub (20), wobei Rohmaterialien (1, 3, 5) im Gegenstromprinzip gegen die Richtung der Strömung der Abgase in eine Vorwärmstufe (8) gegeben, und nach Aufwärmen in der Vorwärmstufe (8) in einem Drehrohrofen (9) zur Klinkerherstellung (9) gebrannt werden, wobei durch die Aufwärmung der Rohmaterialien (1) das in den Rohmaterialien gebundene Quecksilber verdampft und die quecksilberhaltigen Abgase (13) vor dem Austritt in die Atmosphäre in zumindest einer Filterstufe (16) entstaubt werden, wobei mindestens ein Teil des Quecksilbers am abgeschiedenen Filterstaub (20) gebunden ist, der in der Filterstufe (16) abgeschiedene quecksilberhaltige Filterstaub (20) in einem Erhitzer (22) auf mindestens 250 °C erhitzt wird, wobei das Quecksilber gasförmig aus dem Filterstaub (20) ausgetrieben wird, und das gasförmige Quecksilber mit einem durch den Erhitzer (22) geführten Trägergas (25) ausgetragen wird, **dadurch gekennzeichnet, dass**
der Erhitzer (22) mit peripherer Beladeöffnung und zentraler Entladeöffnung (23) für den in der Filterstufe (16) erhaltenen Filterstaub (20) ausgestattet ist und eine zum Zentrum hin geneigte, sich um eine senkrechte Achse drehende, indirekt beheizte Platte umfasst,
wobei der Filterstaub (20) auf der Oberseite der sich drehenden, indirekt beheizten Platte durch den Erhitzer (22) von der Beladeöffnung in Richtung der zentralen Entladeöffnung (23) befördert wird, und das quecksilberhaltige Trägergas (26) aus dem Erhitzer (22) zu einem Reaktor (28) zur Abscheidung von Quecksilber geleitet und das Quecksilber abgeschieden wird.

8. Das Verfahren gemäß Anspruch 7, **dadurch gekennzeichnet, dass** als Erhitzer (22) ein Drehherdofen verwendet wird.

9. Das Verfahren gemäß Anspruch 7 oder 8, **dadurch gekennzeichnet, dass** das quecksilberhaltige Trägergas (26) weniger als 10 mg/Nm³, weniger als 5 mg/Nm³, vorzugsweise weniger als 4 mg/Nm³, vorzugsweise weniger als 3 mg/Nm³, vorzugsweise weniger als 2 mg/Nm³, vorzugsweise weniger als 1 mg/Nm³ Staub bei Austritt aus dem Erhitzer (22) enthält.

10. Das Verfahren gemäß irgendeinem der Ansprüche 7 bis 9, **dadurch gekennzeichnet, dass** das Trägergas (25) vor Eintritt in den Erhitzer (22) auf mindestens 100 °C, vorzugsweise mindestens 150 °C, bevorzugt mindestens 200 °C, und besonders bevorzugt mindestens 250 °C erwärmt wird,
wobei insbesondere bevorzugt das Trägergas (25) vor dem in den Erhitzer (22) mit Abwärme aus dem Zementherstellungsprozess vorgewärmt wird.

11. Das Verfahren gemäß irgendeinem der Ansprüche 7 bis 10, **dadurch gekennzeichnet, dass** die sich drehende, indirekt beheizte Platte des Erhitzers (22) mit Abwärme aus dem Zementherstellungsprozess erwärmt wird.

12. Das Verfahren gemäß irgendeinem der Ansprüche 7 bis 11, **dadurch gekennzeichnet, dass** das durch den Erhitzer (22) geführte Trägergas (25) eine Geschwindigkeit von bis zu 10 cm/s, bevorzugt von bis zu 5 cm/s, weiter bevorzugt von bis zu 1 cm/s aufweist.

13. Verwendung eines Erhitzers (22) zur Abscheidung von Quecksilber und/oder Quecksilberverbindungen aus bei der Zementklinkerherstellung im Abgas anfallendem Filterstaub (20),
wobei der Erhitzer (22) mit peripherer Beladeöffnung und zentraler Entladeöffnung (23) für den Filterstaub (20) ausgestattet ist und eine zum Zentrum hin geneigte, um eine senkrechte Achse drehbare, indirekt beheizbare Platte umfasst,
**dadurch gekennzeichnet, dass** der Filterstaub (20) auf der Oberseite der drehbaren, indirekt beheizbaren Platte durch den Erhitzer (22) von der Beladeöffnung in Richtung der zentralen Entladeöffnung (23) befördert wird, und ein Trägergas (25) durch den Erhitzer (22) über den Filterstaub (20) geführt wird, um das gasförmige Quecksilber aus dem Erhitzer (22) auszutragen.

14. Ein Erhitzer (22) zur gasförmigen Austreibung von Quecksilber und/oder Quecksilberverbindungen aus bei der Zementklinkerherstellung im Abgas anfallendem Filterstaub (20), wobei
der Erhitzer (22) eingerichtet ist zum Aufheizen des quecksilberhaltigen Filterstaubes (20) auf mindestens 250 °C,
der Erhitzer (22) mit peripherer Beladeöffnung und zentraler Entladeöffnung (23) für den Filterstaub (20) ausgestattet ist und eine zum Zentrum hin geneigte, um eine senkrechte Achse drehbare, indirekt beheizbare Platte umfasst,
der Filterstaub (20) auf der Oberseite der drehbaren, indirekt beheizbaren Platte durch den Erhitzer (22) von der Beladeöffnung in Richtung der zentralen Entladeöffnung beförderbar ist,
der Erhitzer (22) eine Haube aufweist, die über der drehbaren, indirekt beheizbaren Platte angeordnet ist, wobei die Platte und die Haube den Innenraum des Erhitzers (22) definieren,
und wobei der Erhitzer (22) eingerichtet ist, ein Trägergas (25) durch den Erhitzer (22) über den Filterstaub (20) zu führen, zur Austragung des gasförmigen Quecksilbers aus dem Erhitzer (22),
wobei optional eine Einrichtung zur Vorwärmung des Trägergases (25) auf mindestens 100 °C vor Eintritt des Trägergases (25) in den Erhitzer (22) angeordnet ist.

## Claims

1. A device for separating mercury and/or mercury compounds from the filter dust (20) that accumulates in the exhaust gas during cement clinker production, comprising a preheating stage (8), a feed for the raw materials (1, 3, 5) required for cement clinker production using the counter-current principle against the direction of the flow of the exhaust gases in the preheating stage (8), a rotary kiln for clinker production (9), and at least one filter stage (16) for dedusting the mercury-containing exhaust gases (13) before they escape into the atmosphere, wherein the filter stage (16) provides mercury-laden filter dust (20), the filter stage (16) is followed by a heater (22) for heating the mercury-containing filter dust (20) to at least 250 °C for the gaseous expulsion of the mercury from the filter dust (20), and the heater (22) is configured to pass a carrier gas (25) through the heater (22) over the filter dust (20) to discharge the gaseous mercury from the heater (22),
**characterized in that** the heater (22) is equipped with a peripheral loading opening and a central discharge opening (23) for the filter dust (20) obtained in the filter stage (16) and comprises an indirectly heated plate inclined towards the center, which plate is rotatable about a vertical axis,
the filter dust (20) is transportable on the upper side of the rotatable, indirectly heatable plate through the heater (22) from the loading opening in the direction of the central discharge opening (23),
and **in that** at least one reactor (28) is arranged downstream of the heater (22) for separating mercury from the mercury-containing carrier gas (26).

2. The device according to claim 1, **characterized in that** the heater (22) is a rotary hearth furnace.

3. The device according to claim 1 or 2, **characterized in that** no device for dust separation is arranged downstream of the heater (22).

4. The device according to any one of claims 1 to 3, **characterized in that** a device for preheating the carrier gas (25) to at least 100 °C, preferably to at least 150 °C, further preferably to at least 200 °C and particularly preferably to at least 250 °C before entry of the carrier gas (25) into the heater (22) is arranged,
wherein particularly preferably the carrier gas (25) is preheated with waste heat from the cement production process.

5. The device according to any one of claims 1 to 4, **characterized in that** the rotatable, indirectly heatable plate is heated with waste heat from the cement production process.

6. The device according to any one of claims 1 to 5, **characterized in that** the heater (22) comprises a hood disposed over the rotatable, indirectly heatable plate, the plate and the hood defining the interior of the heater (22), and a chute is located below the central discharge opening (23), which can be or is sealed off from the interior of the heater (22).

7. A method for separating mercury and/or mercury compounds from filter dust (20) that accumulates in the exhaust gas during the production of cement clinker, whereby raw materials (1, 3, 5) are fed into a preheating stage (8) in a counter-current principle against the direction of the flow of the exhaust gases, and after warming up in the preheating stage (8) are burned in a rotary kiln (9) for clinker production (9), with the heating of the raw materials (1) the mercury bound in the raw materials evaporate and the mercury-containing exhaust gases (13) before escaping into the atmosphere are dedusted in at least one filter stage (16), wherein at least part of the mercury being bound to the separated filter dust (20), the mercury-containing filter dust (20) separated in the filter stage (16) being heated to at least 250 °C in a heater (22), whereby the mercury is expelled from the filter dust (20) in gaseous form, and the gaseous mercury is discharged by a carrier gas (25) passed through the heater (22), **characterized in that**
the heater (22) is equipped with a peripheral loading opening and a central discharge opening (23) for the filter dust (20) obtained in the filter stage (16) and with a indirectly heated plate, which is inclined towards the center and is rotating about a vertical axis,
wherein the filter dust (20) is conveyed on the upper side of the rotating, indirectly heated plate through the heater (22) from the loading opening in the direction of the central discharge opening (23), and the mercury-containing carrier gas (26) is conducted from the heater (22) to a reactor (28) for separating mercury and the mercury is separated.

8. The method according to claim 7, **characterized in that** as the heater (22) a rotary hearth furnace is used.

9. The method according to claim 7 or 8, **characterized in that** the mercury-containing carrier gas (26) contains less than 10 mg/Nm³, less than 5 mg/Nm³, preferably less than 4 mg/Nm³, further preferably less than 3 mg/Nm³, more preferably less than 2 mg/Nm³, preferably less than 1 mg/Nm³ dust when it exits from the heater (22).

10. The method according to any one of claims 7 to 9, **characterized in that** the carrier gas (25) before entering the heater (22) is heated to at least 100 °C, preferably to at least 150 °C, more preferably to at least 200 °C, and particularly preferably to at least 250 °C,
wherein particularly preferably the carrier gas (25) is preheated with waste heat from the cement production process before entering the heater (22).

11. The method according to any one of claims 7 to 10, **characterized in that** the rotating, indirectly heated plate of the heater (22) is heated with waste heat from the cement production process.

12. The method according to any one of claims 7 to 11, **characterized in that** the carrier gas (25) passed through the heater (22) has a velocity of up to 10 cm/s, preferably of up to 5 cm/s, more preferably of up to 1 cm/s.

13. Use of a heater (22) for separating mercury and/or mercury compounds from filter dust (20) that accumulates in the exhaust gas during cement clinker production, the heater (22) being equipped with a peripheral loading opening and a central discharge opening (23) for the filter dust (20) and comprises an indirectly heatable plate inclined towards the center, rotatable about a vertical axis,
**characterized in that** the filter dust (20) is conveyed on the upper side of the rotatable, indirectly heatable plate through the heater (22) from the loading opening in the direction of the central discharge opening (23), and a carrier gas (25) is passed through the heater (22) over the filter dust (20) in order to discharge the gaseous mercury from the heater (22).

14. A heater (22) for the gaseous expulsion of mercury and/or mercury compounds from filter dust (20) accumulating in the exhaust gas during cement clinker production, wherein
the heater (22) is configured to heat the mercury-containing filter dust (20) to at least 250 °C,
the heater (22) is equipped with a peripheral loading opening and central discharge opening (23) for the filter dust (20) and comprises an indirectly heatable plate inclined towards the center, rotatable about a vertical axis,
the filter dust (20) is conveyable on the upper side of the rotatable, indirectly heatable plate through the heater (22) from the loading opening in the direction of the central discharge opening,
the heater (22) comprises a hood which is arranged over the rotatable, indirectly heatable plate, the plate and the hood defining the interior of the heater (22),
and wherein the heater (22) is configured to pass a carrier gas (25) through the heater (22) over the filter dust (20) to discharge the gaseous mercury from the heater (22),
wherein optionally a device is arranged for preheating the carrier gas (25) to at least 100 °C before entry of the carrier gas (25) into the heater (22).

## Revendications

1. Dispositif pour séparer du mercure et/ou des composés de mercure de la poussière de filtre (20) formée dans les gaz d'échappement lors de la production de clinker de ciment, avec un étage de préchauffage (8), une charge pour les matières premières (1, 3, 5) nécessaires pour la production de clinker de ciment selon le principe du contre-courant contre la direction du flux des gaz d'échappement dans l'étage de préchauffage (8), un four rotatif pour la production de clinker (9), et au moins un étage de filtre (16) pour dépoussiérer les gaz d'échappement contenant du mercure (13) avant le rejet dans l'atmosphère, dans lequel l'étage de filtre (16) fournit de la poussière de filtre (20) chargée de mercure, un dispositif de chauffage (22) pour chauffer la poussière de filtre contenant du mercure (20) à au moins 250 °C pour l'expulsion gazeuse du mercure de la poussière de filtre (20) est disposé en aval de l'étage de filtre (16), et dans lequel le dispositif de chauffage (22) est configuré pour guider un gaz porteur (25) à travers le dispositif de chauffage (22) par l'intermédiaire de la poussière de filtre (20) pour décharger le mercure gazeux du dispositif de chauffage (22),
**caractérisé en ce que**
le dispositif de chauffage (22) est équipé d'une ouverture de chargement périphérique et d'une ouverture de décharge centrale (23) pour la poussière de filtre (20) obtenue dans l'étage de filtre (16) et comprend une plaque tournable autour d'un axe vertical, chauffable indirectement et inclinée vers le centre,
la poussière de filtre (20) peut être transportée sur le côté supérieur de la plaque tournable chauffable indirectement par le dispositif de chauffage (22), de l'ouverture de chargement vers l'ouverture de décharge centrale (23),
et au moins un réacteur (28) pour séparer le mercure du gaz porteur contenant du mercure (26) est disposé en aval du dispositif de chauffage (22).

2. Dispositif selon la revendication 1, **caractérisé en ce que** le dispositif de chauffage (22) est un four à sole tournante.

3. Appareil selon la revendication 1 ou 2, **caractérisé en ce qu'**aucun dispositif de séparation de poussières n'est disposé en aval du dispositif de chauffage (22).

4. Dispositif selon l'une quelconque des revendications 1 à 3, **caractérisé en ce qu'un** dispositif de préchauffage du gaz porteur (25) à au moins 100 °C, de préférence au moins 150 °C, plus préférentiellement au moins 200 °C et le plus préférentiellement au moins 250 °C est disposé avant l'entrée du gaz porteur (25) dans le dispositif de chauffage (22),
dans lequel en particulier de préférence le gaz porteur (25) est préchauffé avec de la chaleur perdue du processus de fabrication de ciment.

5. Dispositif selon l'une quelconque des revendications 1 à 4, **caractérisé en ce que** la plaque tournable chauffable indirectement est chauffée avec la chaleur perdue du processus de fabrication de ciment.

6. Dispositif selon l'une quelconque des revendications 1 à 5, **caractérisé en ce que** le dispositif de chauffage (22) présente un capot qui est disposé au-dessus de la plaque tournable chauffable indirectement, dans lequel la plaque et le capot définissent l'espace intérieur du dispositif de chauffage (22), et un puits qui peut être étanchéifié ou fermé vers l'espace intérieur du dispositif de chauffage (22) se trouve sous l'ouverture de décharge centrale (23).

7. Procédé de séparation de mercure et/ou de composés de mercure de la poussière de filtre (20) se produisant dans les gaz d'échappement pendant la production de clinker de ciment, dans lequel des matières premières (1, 3, 5) sont introduites dans un étage de préchauffage (8) à contre-courant de la direction d'écoulement des gaz d'échappement et, après chauffage dans l'étage de préchauffage (8), sont brûlées dans un four rotatif (9) pour la production de clinker (9), dans lequel le mercure lié aux matières premières est vaporisé par le chauffage des matières premières (1) et les gaz d'échappement contenant du mercure (13) sont dépoussiérés dans au moins un étage de filtre (16) avant d'être rejetés dans l'atmosphère, dans lequel au moins une partie du mercure est liée à la poussière de filtre séparée (20), la poussière de filtre contenant du mercure séparée (20) dans l'étage de filtre (16) est chauffée à au moins 250 °C dans un dispositif de chauffage (22), dans lequel le mercure est expulsé sous forme gazeuse de la poussière de filtre (20), et le mercure gazeux est évacué avec un gaz porteur (25) guidé à travers le dispositif de chauffage (22), **caractérisé en ce que**
le dispositif de chauffage (22) est équipé d'une ouverture de chargement périphérique et d'une ouverture de décharge centrale (23) pour la poussière de filtre (20) obtenue dans l'étage de filtre (16) et comprend une plaque chauffée indirectement, tournant autour d'un axe vertical et inclinée vers le centre,
dans lequel la poussière de filtre (20) sur le côté supérieur de la plaque tournant chauffée indirectement est transportée à travers le dispositif de chauffage (22) de l'ouverture de chargement vers l'ouverture de décharge centrale (23), et le gaz porteur contenant du mercure (26) est guidé du dispositif de chauffage (22) à un réacteur (28) pour séparer le mercure et le mercure est séparé.

8. Procédé selon la revendication 7, **caractérisé en ce que** le dispositif de chauffage (22) est utilisé en tant que four à sole tournante.

9. Procédé selon la revendication 7 ou 8, **caractérisé en ce que** le gaz porteur contenant du mercure (26) contient moins de 10 mg/Nm³, moins de 5 mg/Nm³, de préférence moins de 4 mg/Nm³, de préférence moins de 3 mg/Nm³, de préférence moins de 2 mg/Nm³, de préférence moins de 1 mg/Nm³ de poussière à la sortie du dispositif de chauffage (22).

10. Procédé selon l'une quelconque des revendications 7 à 9, **caractérisé en ce que** le gaz porteur (25) est chauffé à au moins 100 °C, de préférence au moins 150 °C, plus préférentiellement au moins 200 °C, et le plus préférentiellement au moins 250 °C avant d'entrer dans le dispositif de chauffage (22),
dans lequel en particulier de préférence le gaz porteur (25) est préchauffé avec de la chaleur perdue du processus de fabrication de ciment avant d'entrer dans le dispositif de chauffage (22).

11. Procédé selon l'une quelconque des revendications 7 à 10, **caractérisé en ce que** la plaque tournant chauffée indirectement du dispositif de chauffage (22) est chauffée avec la chaleur perdue du processus de fabrication de ciment.

12. Procédé selon l'une quelconque des revendications 7 à 11, **caractérisé en ce que** le gaz porteur (25) guidé à travers le dispositif de chauffage (22) présente une vitesse allant jusqu'à 10 cm/s, de préférence jusqu'à 5 cm/s, plus préférentiellement jusqu'à 1 cm/s.

13. Utilisation d'un dispositif de chauffage (22) pour séparer le mercure et/ou les composés de mercure de la poussière de filtre (20) présente dans les gaz d'échappement lors de la production de clinker de ciment,
dans lequel le dispositif de chauffage (22) est équipé d'une ouverture de chargement périphérique et d'une ouverture de décharge centrale (23) pour la poussière de filtre (20) et comprend une plaque tournable autour d'un axe vertical, chauffable indirectement et inclinée vers le centre, **caractérisée en ce que** la poussière de filtre (20) sur le côté supérieur de la plaque tournable chauffable indirectement est transportée à travers le dispositif de chauffage (22) de l'ouverture de chargement vers l'ouverture de décharge centrale (23), et un gaz porteur (25) est guidé à travers le dispositif de chauffage (22) sur la poussière de filtre (20) pour décharger le mercure gazeux du dispositif de chauffage (22).

14. Dispositif de chauffage (22) pour l'expulsion gazeuse de mercure et/ou de composés de mercure de la poussière de filtre (20) présente dans les gaz d'échappement lors de la production de clinker de ciment, dans lequel
le dispositif de chauffage (22) est configuré pour chauffer la poussière de filtre contenant du mercure (20) à au moins 250 °C,
le dispositif de chauffage (22) est équipé d'une ouverture de chargement périphérique et d'une ouverture de décharge centrale (23) pour la poussière de filtre (20) et comprend une plaque tournable autour d'un axe vertical, chauffable indirectement et inclinée vers le centre,
la poussière de filtre (20) peut être transportée sur le côté supérieur de la plaque tournable chauffable indirectement par le dispositif de chauffage (22), de l'ouverture de chargement vers l'ouverture de décharge centrale,
le dispositif de chauffage (22) présente un capot qui est disposé sur la plaque tournable chauffable indirectement, dans lequel la plaque et le capot définissant l'espace intérieur du dispositif de chauffage (22),
et dans lequel le dispositif de chauffage (22) est configuré pour guider un gaz porteur (25) à travers le dispositif de chauffage (22) sur la poussière de filtre (20) pour décharger le mercure gazeux du dispositif de chauffage (22),
dans lequel, facultativement, un dispositif est disposé pour préchauffer le gaz porteur (25) à au moins 100 °C avant l'entrée du gaz porteur (25) dans le dispositif de chauffage (22).
